# EUROPEAN PATENT APPLICATION

(11) **EP 3 981 544 A1**
(43) Date of publication of application: **13.04.2022**
(21) Application number: 20020466.7
(22) Date of filing: 08.10.2020
(51) Int. Cl.: B23K 35/02, H05H 1/34, B23K 35/40

(54) **PLUS POLE ELECTRODE**

(71) Applicant: Linde GmbH, 82049 Pullach (DE)
(72) Inventor: Siewert, Erwan, 85283 Niederlauterbach (DE); Hussary, Nakhleh A., 85737 Ismaning (DE)
(74) Representative: Lu, Jing

(57) **Abstract**

The present invention relates to an electrode (1) for plus pole welding, particularly TIG welding, comprising: a base body (10) having a face side (11) and extending along a central longitudinal axis (z) of the electrode (1), and a tapered emissive element (20) connected to the face side (11) of the base body (10) and forming a tip of the electrode (1). According to the present invention, the base body (10) comprises silver (Ag), and/or the face side (11) of the base body (10) comprises a protrusion (12) that is arranged in a form-fitting manner in a recess (21) of the emissive element (20), or the emissive element comprises a protrusion that is arranged in a form-fitting manner in a recess of the face side of the base body.

## Description

The present invention relates to an electrode for plus pole welding, particularly plus pole TIG (Tungsten Inert Gas) welding.

In a plus pole welding process the electrode is electrically connected to the plus pole of the energy source while the workpiece(s) to be welded is connected to the minus pole of the energy source. An arc is generated between the electrode and the workpiece(s) to be welded to generate a weld pool on the workpiece(s) to be welded.

However, welding with standard rod electrodes in plus pole welding causes fast melting of the electrode, particularly at higher currents (above 100A). Melting of the electrode causes tungsten to deposit in the weld pool leading to defects and rejection of the welds. Water cooled electrodes are typically used, since in plus pole welding (EP - electrode positive), the heat load is very high (compared to EN - electrode negative). In some of these electrodes it is typical to have an emissive insert (e.g. tungsten) attached to a copper base that is water cooled to manage this heat. The intensive heat into a plus pole electrode challenges the existing methods to manage the heat load. As noted earlier, if not managed correctly, the molten emissive material (tungsten, hafnium, zirconium, etc. or an alloy thereof) melts and evaporates and finds its way into the weld pool causing defects.

The emissive materials have relatively low thermal conductivity causing overheating. The resulting defects may cause rejection of the weld leading to re-working or scaping of the work piece.

Based on the above, the problem to be solved by the present invention is to provide an electrode that is improved regarding at least one of the afore-mentioned drawbacks.

This problem is solved by an electrode having the features of claim 1. Preferred embodiments of the present invention are stated in the corresponding sub claims and are described below.

According to caim 1, an electrode for plus pole welding, particularly TIG welding, is disclosed comprising:
- a base body having a face side end extending along a central longitudinal axis of the electrode, and
- an (e.g. tapered) emissive element connected to the face side of the base body and forming a tip of the electrode, wherein particularly the emissive element extends along the central longitudinal axis, too.

According to the present invention the face side of the base body comprises a protrusion that is arranged in a form-fitting manner in a recess of the emissive element, or the emissive element comprises a protrusion that is arranged in a form-fitting manner in a recess of the face side of the base body.

Particularly, the emissive element serves for supporting the arc and consists of a material that comprises a comparatively low work function so that the emissive element easily emits electrons by way of thermionic emission when a suitable electrical potential is applied to the emissive element.

According to a preferred embodiment, the base body comprises at least one one of: silver (Ag), copper (Cu). According to an embodiment of the present invention, the use of silver for the base material is advantageous due to its high thermal conductivity and thermal diffusivity, particularly in case of relatively high current loads. Alternatively, according to a preferred embodiment, the base body comprises copper, or can consist of copper or of a copper alloy which reduces costs compared to the use of silver. Although silver comprises the higher thermal performance.

The tip/emissive element can be tapered (e.g. conical), but may also form a dome, for example a hemisphere or any other similar shape comprising a decreasing diameter towards an end of the tip/emissive element.

Furthermore, according to an embodiment, the emissive element comprises at least one of the following materials: hafnium; zirconium; tungsten; an alloy comprising one of more of: hafnium, zirconium, tungsten.

Further, according to an embodiment, the base body comprises a mass fraction of silver of at least 50 wt%, preferably of at least 70 wt%, preferably at least 90 wt%, preferably of at least 92.5 wt%, preferably of 100 wt% (i.e. pure silver which may comprise impurities comprising a mass fraction below 0.01 wt%).

Furthermore, according to an embodiment, the protrusion and/or the recess comprises one of the following: a cylindrical shape, a semi-spherical shape, the shape of a pyramid, the shape of a truncated pyramid, the shape of a step pyramid, a stepped protrusion, particularly comprising a cylindrical symmetry with repect to the central longitudinal axis of the electrode, an annular shape.

Further, according to an embodiment, the protrusion is coaxially arranged with respect to the central longitudinal axis of the electrode. According to a futher embodiment, the recess is coaxially arranged with respect to the central longitudinal axis of the electrode.

Furthermore, according to an embodiment, the protrusion comprises an outer diameter and the recess comprises an inner diameter, and wherein the emissive element comprises an outer diameter, and wherein a ratio of the outer diameter of the protrusion to the outer diameter of the emissive element is in the range of 20 % to 80 %, preferably in the range of 35 % to 60 %, and/or wherein a ratio of the inner diameter of the recess to the outer diameter of the emissive element is in the range of 20 % to 80 %, preferably in the range of 35 % to 60 %. Particularly, these inner and outer diameters extend perpendicular to the central longitudinal axis.

Furthermore, according to an embodiment, the protrusion comprises a height with respect to the central longitudinal axis of the electrode, and wherein the recess comprises a depth with respect to the central longitudinal axis of the electrode, and wherein the emissive element comprises a height with respect to the central longitudinal axis of the electrode, wherein a ratio of the height of the protrusion to the height of the emissive element is in the range of 25 % to 85 %, preferably in the range of 50 % to 75 %, and/or wherein a ratio of the depth of the recess to the height of the emissive element is in the range of 25 % to 85 %, preferably in the range of 50 % to 75 %.

According to yet another embodiment, the annular protrusion comprises a circumferential center line having a diameter that amounts to 20 % to 80 % of the outer diameter of the emissive element, preferably to 35 % to 70 % of the outer diameter of the emissive element.

Furthermore, according to an embodiment, the protrusion comprises a minimal distance to an exterior surface of the electrode, wherein this distance is in the range from 1 mm to 5 mm, preferably in the range from 1.5 mm to 2 mm. Particularly, this minimum distance may vary as a function of the operating current such that a larger value may be used with higher currents.

Furthermore, according to an embodiment, the face side of the base body comprises a plurality of protrusions, wherein the respective protrusion is arranged in a form-fitting manner in an associated recess of the emissive element, or the emissive element comprises a plurality of protrusions, wherein the respectivr protrusion is arranged in a form-fitting manner in an associated recess of the face side of the base body.

Further, according to an embodiment, the plurality of protrusions comprises a central protrusion arranged on the central longitudinal axis of the electrode as well as further protrusions arranged around the central longitudinal axis, wherein the further protrusions are preferably equidistantly spaced.

Furthermore, according to an embodiment, the respective protrusion is one of: a cylindrical protrusion, a semi-sherical protrusion (or one of the shapes disclosed above)

Furthermore, according to yet another embodiment, the respective protrusion is an annular protrusion, wherein said annular protrusions are coaxially arranged with respect to the central longitudinal axis of the electrode.

Further, according to an embodiment, the emissive element is connected to the face side of the base via at least one of: a substance-to-substance bond, a force-locking connection, a form-fitting connection. Particularly, a substance-to-substance bond may be provided by one of: brazing, welding, friction welding, diffusion bonding. Furthermore, mechanical joining, mechanical pressing, or a threaded connection can be used to join the emissive element and the base body.

According to a preferred embodiment, the base body of the electrode comprises a cavity for receiving a fluid coolant. Particularly, in the framework of the present invention "fluid" includes gaseous, liquid and multi-phase coolants.

Particularly, in an embodiment, the base body comprises an internal protrusion protruding from a wall of the base body into the cavity (particularly along the central longitudinal axis), wherein said wall forms said face side of the base body to which the emissive element is connected.

According to a further embodiment, the electrode comprises a coolant tube extending around said internal protrusion, particularly so as to further enhance the cooling by increasing the speed of the coolant around the internal protrusion.

A further aspect of the present invention relates to a method for welding at least one workpiece, wherein the method comprises the steps of:
- providing an electrode according to one of the preceding claims, and connecting the electrode to a plus pole of an energy source, and
- generating an arc using the electrode to weld the at least one workpiece.

In the following, embodiments of the present invention as well as further features and advantages of the present invention shall be described with reference to the Figures, wherein:
- Fig. 1: shows a lateral view of an electrode comprising an emissive element connected to a base body according to an embodiment of the present invention,
- Fig. 2: shows a cross section of the electrode of Fig. 1,
- Fig. 3: shows a cavity in the base body of the electrode of Figs. 1 and 2 for receiving a fluid coolant (e.g. water),
- Fig. 4: shows a further embodiment of an electrode according to the present invention, wherein the base body comprises a cylindrical protrusion arranged in a recess of the emissive element,
- Fig. 5: shows a further embodiment of an electrode according to the present invention, wherein the base body comprises a semi-spherical protrusion arranged in a recess of the emissive element,
- Fig. 6: shows a further embodiment of an electrode according to the present invention, wherein the base body comprises an annular protrusion arranged in an annular recess/groove of the emissive element, and
- Fig. 7: shows a further embodiment of an electrode according to the present invention, wherein the base body comprises an internal protrusion protruding into a cavity of the base body.

The present invention relates to an electrode 1 for plus pole welding, particularly TIG welding. Such an electrode / welding process is particularly suitable for welding aluminium alloys.

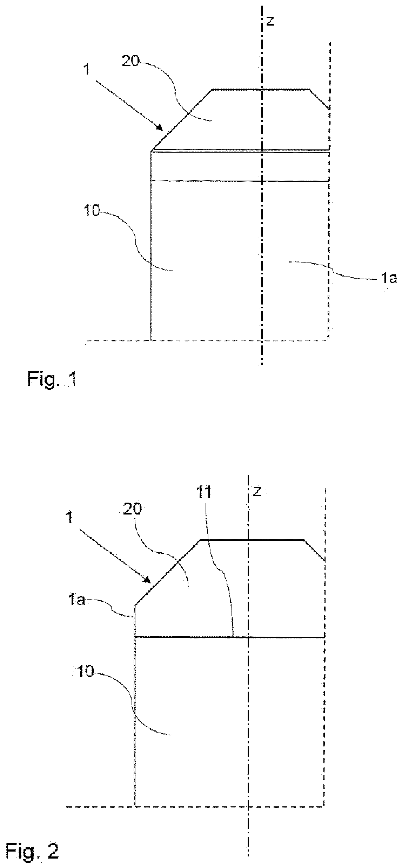

Embodiments of a first aspect of the present invention are shown in Figs. 1 to 3.

According to Figs. 1 and 2, the electrode 1 comprises a base body 10 having a face side 11 and extending along a central longitudinal axis z of the electrode 1, wherein particularly the face side 11 extends perpendicular to the central longitudinal axis z. The electrode 1 further comprises a tapered emissive element 20 that can comprise the shape of a truncated cone. The emissive element 20 forms a tip of the electrode 1 and serves for supporting an arc upon welding.

The emissive element 20 is connected to the face side 11 of the base body.

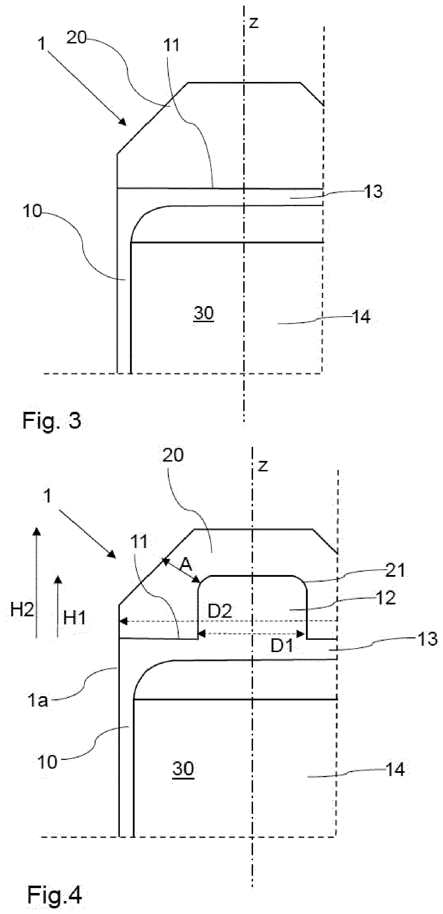

As shown in Fig 3, the base body 10 can further comprise a cavity 14 for receiving a fluid coolant (e.g. comprising water) so as to cool the electrode 1 upon welding be passing said coolant through the cavity 14.

According to an aspect of the present invention, the base body 10 comprises silver (Ag). Particularly, the base body 10 comprises a mass fraction of silver of at least 50 wt%, preferably of at least 70 wt%, preferably at least 90 wt%, preferably of at least 92.5 wt%, preferably of 100 wt% (i.e. the base body is formed out of pure silver).
In other embodiments, where the electrode comprises protrusions on the base body (or on the emissive element), the base body can comprise silver (e.g. according to the examples stated above), or, as an alternative, copper (or can be formed out of copper or out of a copper alloy).

In all embodiments according to Fig. 1 to Fig. 7, the emissive element 20 can comprise at least one of the following materials: hafnium; zirconium; tungsten; an alloy comprising one of more of: hafnium, zirconium, tungsten.

Furthermore, according to the embodiment shown in Fig. 4, the electrode 1 extends along a central longitudinal axis z and comprises a base body 10 comprising a face side 11 from which a cylindrical protrusion 12 of the base body 10 protrudes along the central longitudinal axis z. The face side 11 (and the protrusion 12) of the base body 10 is connected to a tapered emissive element 20 that can be formed as a truncated cone. The emissive element 20 comprise a recess 21 for accommodation of the protrusion 12 in a form-fitting manner. Furthermore, the base body 10 comprises a cavity 14 for receiving a fluid coolant 30 to cool the electrode upon welding. The cavity 14 is separated from the emissive element by a wall 13 of the base body 10, which wall 13 forms the face side 11 of the base body from which face side 11 said protrusion 12 of the base body 10 protrudes into the recess 21 formed into the emissive element 20.

Preferably, the protrusion 12 is coaxially arranged with respect to the central longitudinal axis z, i.e. comprises a cylinder symmetry regarding this axis z. Due to the higher thermal conductivity of the electrode's base body 10 and the typically lower thermal conductivity (as well as electrical conductivity) of the emissive element 20, the recess 21 is preferably applied to the emissive element 20 and the protrusion 12 is preferably applied to the base body 10. However, this order may also be reversed in the various embodiments, particularly in case a thermal load capacity improvement regarding the base body 10 is available.

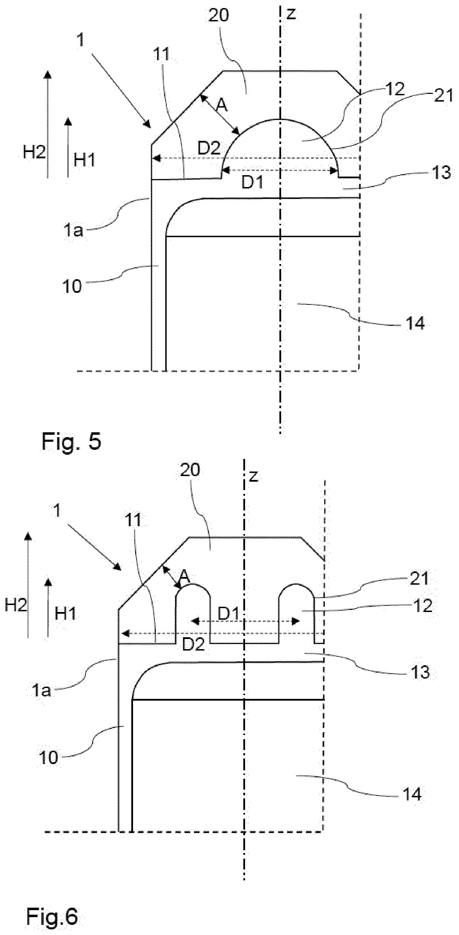

The protrusion 12 can have different shapes. Apart from the cylindrical protrusion 12 shown in Fig. 4 that can have a rounded edge on a top side of the protrusion 12, the protrusion can alse comprise a spherical curvature and may have a semi-spherical shape as shown in Fig. 5.

Furthermore, as shown in Fig. 6, the protrusion 12 can be an annular protrusion 12, i.e. a protrusion 12 formed as a ring that is arranged in a recess 21 of the emissive element 20, wherein the recess 21 forms a corresponding annular groove 21. Preferably, the annular protrusion 12 is coaxially arranged with respect to the central longitudinal axis z of the electrode 1.

Particularly, the respective protrusion shown in Figs. 4 to 6 can comprises a height H1 in the direction of the central longitudinal axis z and the respective emissive element 20 can comprises a height H2 in the direction of the central longitudinal axis z, too, wherein a ratio of the height H1 of the respective protrusion 12 to the height H2 of the respective emissive element 20 is preferably in the range of 25 % to 85 %, preferably in the range of 50 % to 75 %.

Furthermore, particularly, the respective protrusion 12 shown in Figs. 4 and 5 can comprise an outer diameter D1 perpendicular to the central longitudinal axis z and the resective emissive element 20 can comprise an outer diameter D2 perpendicular the central longitudinal axis z, wherein preferably a ratio of the outer diameter D1 of the respective protrusion to the outer diameter D2 of the respective emissive element 20 is in the range of 20 % to 80 %, preferably in the range of 35 % to 60 %.

Regarding the embodiment shown in Fig. 6, the annular protrusion 12 comprises a circumferential center line that can comprise a diameter D1 that preferably amounts to 20 % to 80 % of the outer diameter D2 of the emissive element 20, preferably to 35 % to 70 % of the outer diameter D2 of the emissive element 20.

Generally, in the various embodiments shown in Fig. 4 to Fig. 7, the respective protrusion 12 preferably comprises a minimal distance A to an exterior surface 1a of the electrode 1, wherein this distance is in the range from 1 mm to 5 mm, preferably in the range from 1.5 mm to 2 mm.

Furthermore, apart from an external protrusion 12 as shown in Fig. 4 to 7, the base body 10 can also comprise an internal protrusion 15 protruding from the wall 13 of the base body 10 into the cavity 14, wherein said wall 13 forms said face side 11 of the base body 10 to which the emissive element 20 is connected. Preferably, the internal protrusion 15 is coaxially arranged with respect to the central longitudinal axis z and forms a circumferential gap 17 with a lateral interior surface 10a of the cavity 14.

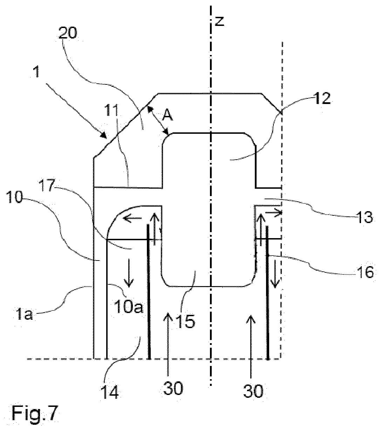

According to the embodiment shown in Fig. 7, the electrode 1 can comprise a coolant tube 16 extending around the internal protrusion 15. The tube 16 allows to quickly distribute coolant 30 around the internal protrusion to cool the base body and components connected thereto. Also, the embodiments shown in Fig. 3 to 6 can be equipped with an internal protusion 15 according to Fig. 7 and may also comprise a coolant tube 16 extending around the respective internal protrusion 15.

The present invention offers a variety of advantages. Particularly, it results in an improved cooling of the electrode and specifically the emissive element.
This allows to improve the performance of the electrode at all current levels, and more specifically at high currents.

The improvement in cooling allows delaying the degradation of the electrode and thus a prolongation of its life time. Furthermore, a reduction/elimination of the melting of the emissive element and consequently an elimination of any inclusion of impurities in the weld can be achieved.

The invention thus provides one with a larger operating window, i.e. less sensitivity of the electrode when using pulse and AC processes as well as fast current increases and high current amplitudes (high [A/s]). Furthermore, the present invention enables one to use smaller emissive elements and improve the welding process to increase penetration.

## Claims

1. An electrode (1) for plus pole welding, particularly TIG welding, comprising:
- a base body (10) having a face side (11) and extending along a central longitudinal axis (z) of the electrode (1), and
- an emissive element (20) connected to the face side (11) of the base body (10) and forming a tip of the electrode (1),
**characterized in that**
the face side (11) of the base body (10) comprises a protrusion (12) that is arranged in a form-fitting manner in a recess (21) of the emissive element (20), or the emissive element comprises a protrusion that is arranged in a form-fitting manner in a recess of the face side of the base body.

2. The electrode according to claim 1, **characterized in that** the emissive element (20) comprises at least one of the following materials: hafnium; zirconium; tungsten; an alloy comprising one of more of: hafnium, zirconium, tungsten

3. The electrode according to claim 1 or 2, **characterized in that** the base body (10) comprises a mass fraction of silver of at least 50 wt%, preferably of at least 70 wt%, preferably at least 90 wt%, preferably of at least 92.5 wt%, preferably of 100 wt%.

4. The electrode according to one of the prececing claims, **characterized in that** the base body (10) comprises copper.

5. The electrode according to one of the preceding claims, **characterized in that** the protrusion (12) and/or the recess (21) comprises one of the following: a cylindrical shape, a semi-spherical shape, the shape of a pyramid, the shape of a truncated pyramid, the shape of a step pyramid, a stepped protrusion, an annular shape.

6. The electrode according to one of the preceding claims, **characterized in that** that the protrusion (12) is coaxially arranged with respect to the central longitudinal axis (z) of the electrode (1) and/or that the recess (21) is coaxially arranged with respect to the central longitudinal axis (z) of the electrode (1).

7. The electrode according to one of the preceding claims, **characterized in that** the protrusion (12) comprises an outer diameter (D1), and/or wherein the recess (21) comprises an inner diameter (D1), and wherein the emissive element comprises an outer diameter (D2), wherein a ratio of the outer diameter (D1) of the protrusion to the outer diameter (D2) of the emissive element (20) is in the range of 20 % to 80 %, preferably in the range of 35 % to 60 %, and/or wherein a ratio of the inner diameter (D1) of the recess (21) to the outer diameter (D2) of the emissive element (20) is in the range of 20 % to 80 %, preferably in the range of 35 % to 60 %.

8. The electrode according to one of the preceding claims, **characterized in that** the protrusion (12) comprises a height (H1) and/or wherein the recess (21) comprises a depth (H1), and wherein the emissive element (20) comprises a height (H2), wherein a ratio of the height (H1) of the protrusion (12) to the height (H2) of the emissive element (20) is in the range of 25 % to 85 %, preferably in the range of 50 % to 75 %, and/or wherein a ratio of the depth (H1) of the recess (21) to the height (H2) of the emissive element (20) is in the range of 25 % to 85 %, preferably in the range of 50 % to 75 %.

9. The electrode according to one of the claims 5 to 8, **characterized in that** the annular protrusion (12) comprises a circumferential center line having a diameter (D1) that corresponds to 20 % to 80 % of an outer diameter (D2) of the emissive element (20), preferably to 35 % to 70 % of the outer diameter (D2) of the emissive element (20).

10. The electrode according to one of the preceding claims, **characterized in that** the protrusion (12) comprises a minimal distance (A) to an exterior surface (1a) of the electrode (1), whrein this distance is in the range from 1 mm to 5 mm, preferably in the range from 1.5 mm to 2 mm.

11. The electrode according to one of the prececing claims, **characterized in that** the emissive element (20) is connected to the face side (11) of the base body (10) via at least one of: a substance-to-substance bond, a force-locking connection, a form-fitting connection.

12. The electrode according to one of the preceding claims, **characterized in that** the base body (10) comprises a cavity (14) for receiving a fluid coolant (30).

13. The electrode according to claim 12, **characterized in that** the base body (10) comprises an internal protrusion (15) protruding from a wall (13) of the base body (10) into the cavity (14), wherein said wall forms said face side (11) of the base body (10) to which the emissive element (20) is connected.

14. The electrode according to claim 13, **characterized in that** the electrode (1) comprises a coolant tube (16) extending around said internal protrusion (15).

15. A method for welding at least one workpiece, wherein the method comprises the steps of:
- providing an electrode (1) according to one of the preceding claims, and connecting the electrode (1) to a plus pole of an energy source, and
- generating an arc using the electrode (1) to weld the at least one workpiece.
